## Europäisches Patentamt
## European Patent Office
## Office européen des brevets

(11) Numéro de publication: **0 022 409**
**B1**

## (12) FASCICULE DE BREVET EUROPEEN

(45) Date de publication du fascicule du brevet: **31.10.84**

(21) Numéro de dépôt: **80401007.2**

(22) Date de dépôt: **02.07.80**

(51) Int. Cl.³: **H 01 M 4/74, H 01 M 4/64**

(54) **Structure d'électrodes pour générateur électrochimique.**

(30) Priorité: **06.07.79 FR 7917540**

(43) Date de publication de la demande:
**14.01.81 Bulletin 81/02**

(45) Mention de la délivrance du brevet:
**31.10.84 Bulletin 84/44**

(84) Etats contractants désignés:
**BE CH DE GB IT LI SE**

(56) Documents cités:
**CH-A- 385 308**
**DE-A-1 671 761**
**DE-A-1 915 859**
**DE-A-2 204 752**
**DE-A-2 251 160**
**FR-A-1 235 236**
**FR-A-1 598 370**
**FR-A-2 058 732**
**FR-A-2 232 839**

(73) Titulaire: **SORAPEC, SARL, Société de Recherche et d'Applications Electrochimiques 192, rue Carnot F-94120 Fontenay sous Bois (FR)**

(72) Inventeur: **Doniat, Denis 3 bis rue J.B. Lanoz F-94170 Le Perreux (FR)**

Courier Press, Leamington Spa, England.

## Description

La présente invention concerne les générateurs électrochimiques. Elle constitue une conception et une réalisation nouvelles d'électrodes destinées à être utilisées dans des accumulateurs à milieu électrolytique liquide.

Nombreux sont actuellement les travaux qui visent à promouvoir des accumulateurs caractérisés par une énergie massique et une puissance massique élevées. Deux voies principales sont alors étudiées: celle des couples électrochimiques incompatibles avec un électrolyte aqueux; celle des couples plus conventionnels dont la température de fonctionnement est voisine de la température ambiante.

Pour la première voie, même les systèmes qui apparaissent les plus prometteurs (Na-S et SFe-Li par exemple) ne semblent pouvoir fournir, en dépit d'une énergie massique théorique très élevée, qu'une énergie massique pratique de l'ordre de 100 Wh/kg. Ils sont par ailleurs pénalisés tant par leur coût au KWh que par la température élevée à laquelle s'effectue leur fonctionnement qui limite considérablement leurs types possibles d'utilisations.

Pour ce qui concerne les accumulateurs fonctionnant à une température proche de l'ambiante et compatibles avec un milieu électrolytique aqueux, on peut retenir, outre le couple Pb-PbO$_2$, certains systèmes qui opèrent en milieu alcalin avec, comme anodes, des électrodes de fer, d'hydrures ou de zinc. Les cathodes envisageables peuvent être, selon les cas, des électrodes à oxygène, ou des électrodes d'hydroxyde de nickel notamment.

Concernant les anodes de fer ou d'hydrures et les électrodes à oxygène dites réversibles, des problèmes fondamentaux demandent encore à être résolus avant que ne puisse être envisagée la mise au point de générateurs faisant appel à ces éléments. Pour ce qui est de l'anode de zinc, à priori très intéressante tant par son potentiel que par sa capacité théorique, elle n'apparaît actuellement utilisable que sous forme dispersée si l'on veut pouvoir lui faire atteindre un nombre de cycles de décharge suffisant. Telle était la finalité des deux brevets DE—A—2.204.752 (Deutsche Automobilgesellschaft) et DE—A—1.671.761 (Farben Fabriken Bayer). Le premier décrit un procédé de réalisation d'électrodes à hydroxyde de nickel utilisant comme support un matériau fibreux préférentiellement non tissé. L'invention décrite consiste, en vue d'obtenir une capacité massique maximale, à effectuer le remplissage de cette structure fibreuse nickelée en matière active. Le procédé revendiqué fait obligatoirement intervenir une succession d'au moins deux étapes de remplissage, réalisées selon une technique quelconque, séparées par un cycle de charge-décharge de l'électrode. Le procédé repose sur le fait qu'après remplissage en hydroxyde de nickel, et cycle de charge-décharge, il semble possible de réintroduire un volume complémentaire de matière active, et d'accroître ainsi la capacité massique jusqu'à une valeur de 178 Ah/kg. Cette description permet à tout homme de l'art de s'apercevoir qu'elle met largement en evidence un defaut de tenue de l'électrode, imputable soit à la conception du support fibreux (métallisation imparfaite à travers toute l'épaisseur) soit à la mise en place de la matière active (remplissage de la structure, et non pas dépôt mince sur chaque fibre du support, expliquant une mauvaise adhérence). En effet la réalisation d'un cycle de charge-décharge sur une électrode à hydroxyde de nickel, et ce quelle que soit la configuration de la structure collectrice, provoque un léger gonflement de la matière active. On conçoit mal que le déroulement d'un tel cycle soit alors de nature à favoriser l'introduction d'un complément d'hydroxyde de nickel. La seule explication tient à un effritement de l'électrode au cours du cycle, et donc à une perte de matière active. C'est cette perte, et peut-être celle d'une partie incomplètement métallisée du support, qu'il est alors possible de compenser au cours de la deuxième étape du remplissage, laquelle, après élimination des parties fragiles de l'ensemle, peut avoir pour effet de consolider durablement l'électrode. La capacité massique obtenue, 178 Ah/kg, est très sensiblement supérieure à celles que permettent d'atteindre les structures classiques. Elle demeure cependant très inférieure à celle fournie par une électrode de nickel selon l'invention qui fait l'objet du présent brevet. Le second brevet cité s'attache à la description d'électrodes réalisées sur la base de supports organiques tissés ou réticulés, métallisés par voie chimique et/ou galvanique, ou sous vide, après dégraissage et rugosification. Le dépôt des matières actives est ensuite réalisé par procédé chimique ou galvanique. L'examen de ce brevet ne fait apparaître aucun élément technique, non plus que la volonté des inventeurs, qui permette de réaliser au sein de la structure poreuse une métallisation fine qui respecte la porosité initiale et soit effectuée à la surface de chaque fibre sans colmater le support à travers son épaisser. Les matières actives ne sont pas davantage sensées être déposées en couche mince à la surface de chaque fibre, dans toute l'épaisseur du support, la revendication principale indiquant que la matière active est placée à la surface de celui-ci. Aucune valeur de capacité n'est fournie dans le cas de réalisation d'électrode de nickel ou de cadmium. Il est simplement indiqué un rendement de 75% dans le cas de constitution d'un accumulateur au plomb, ce qui confirme que la matière active n'est pas placée, dans sa totalité, en couche mince, au contact intime du collecteur dans toute l'épaisseur de celui-ci.

La présente invention a pour objet d'offrir une réponse nouvelle à la recherche d'accumulateurs susceptibles de fournir une énergie massique et une puissance massique élevées. Elle rend possible la réalisation de tels générateurs en innovant au niveau de la structure même des électrodes, pour des couples classiques d'électrodes. Ainsi, cette nouvelle conception de structure d'électrode peut-elle être appliquée dans le cas de générateurs nickel-cadmium notamment. Elle peut l'être également à des électrodes de fer et sera de nature à rendre concevable l'utilisation de générateurs fer-nickel dès lors que les progrès décisifs auront été enregistrés quant aux caractéristiques de l'électrode de fer. D'une manière générale, la présente invention est susceptible de trouver des applications pour la réalisation des électrodes utilisées dans les générateurs électrochimiques à électrolyte liquide.

L'invention qui fait l'objet du présent brevet consiste et une conception nouvelle de structure d'électrode. Selon cette invention, on réalise cette électrode dans une structure poreuse de faible épaisseur, par dépôt d'une couche métallique destinée à assurer la collecte du courant, puis d'une couche du matériau actif de l'électrode.

Une électrode ainsi réalisée est destinée à offrir un certain nombre d'avantages dont la recherche conditionne le choix des éléments entrant dans son élaboration.

L'objectif à atteindre étant d'obtenir une énergie et une capacité massiques importantes, le substrat choisi est une structure de faible densité d'un matériau minéral ou organique à structure poreuse ou fibreuse. Son poids doit être faible par rapport à celui du matériau d'électrode. Sa surface réelle, ou surface développée du substrat dans toute son épaisseur, doit se situer dans un rapport elevé par rapport à la surface apparente. Le substrat peut être constitué par tout matériau léger et chimiquement inerte dans les conditions d'utilisation: il peut notamment, et selon les cas, s'agir de carbone, graphite, celluloses, polyesters, polyamides, … Dans le cas de l'utilisation du substrat poreux, on peut par exemple faire appel à des films microporeux, notamment en polychlorure de vinyle. La dimension des pores est alors choisie de manière à obtenir une surface développée qui soit la plus grande possible, ce quie conduit à retenir une très petite taille de pores, sans pour autant exagérer ce caractère qui risquerait d'amener à un colmatage des cavités et donc à une réduction de la surface réelle et de la porosité globale lors des dépôts du collecteur de charges et de la matière active d'électrode. Pour ces raisons, les pores du matériau ont un diamètre compris entre 3 et 30 $\mu$m. Afin également que le rapport surface développée sur surface apparente soit le plus élevée possible, il convient que la valeur de la porosité soit forte, en l'occurence qu'elle ne soit pas inférieure à 50%. Enfin, il convient de limiter l'épaisseur de microporeux à une valeur qui ne dépasse pas 500 $\mu$m. La raison en est que les dépôts qui sont réalisés pour l'élaboration de l'électrode, doivent l'être sur la totalité de la surface développée du substrat microporeux, c'est à dire dans toute l'épaisseur de ce support, à l'intérieur de chacun des pores de celui-ci. Il n'est par conséquent pas possible de donner au substrat une épaisseur trop importante qui interdirait la réalisation de ces dépôts dans tout son volume. Dans le cas de l'utilisation comme substrat, d'un feutre ou d'un tissu perméable, il convient, en fonction des mêmes critères, de déterminer la diamètre des fibres, la compacité de leur enchevêtrement et l'épaisseur de matériau.

En tout état de cause, on détermine l'épaisseur à donner au substrat, qu'il soit de struture poreuse ou fibreuse et dans ce second cas, tissé ou non tissé, en fonction de sa porosité et de la dimension de ses pores ou interstices internes, l'épaisseur pouvant croître si l'on choisit une structure plus largement "aérée", de manière à ce que les dépôts à réaliser sur le substrat puissent être effectués dans toute l'épaisseur du support initial et sans colmatage ce celui-ci.

Sur le substrat poreux ainsi choisi, on réalise dans un premier temps une couche métallique destinée à assurer la conduction des charges électriques: il s'agit de constituer un collecteur de courant. Celui-ci est obtenu par la réalisation sur la totalité de la surface développée du substrat, c'est-à-dire dans toute son épaisseur, d'un ou plusieurs dépôts métalliques.

L'ensemble de ces dépôts doit être réalisé de manière à ne pas provoquer de colmatage de la structure, c'est-à-dire qu'il doit être le plus uniforme possible et que son épaisseur est de l'ordre du micron ou de quelques $\mu$m. Celle-ci est par ailleurs déterminée de façon telle que, compte tenu de la dimension des électrodes et du mode de collecte (frontale ou marginale), les chutes ohmiques dans ce collecteur soient négligeables.

La constitution du collecteur sur le substrat initial doit également répondre aux critères suivants: être inerte dans les milieux de traitements successifs et d'utilisation, et, tout en étant bon conducteur de l'électricité, être d'un coût acceptable.

La réalisation du collecteur par métallisation peut donc être menée de manières diverses variant notamment selon la nature du substrat initial, la nature du matériau actif d'électrode et le type d'utilisation de celle-ci.

De manière générale, il apparaît utile de constituer le collecteur par la succession d'au moins deux dépôts métalliques. En effet, sauf lorsque le substrat initial est par lui-même conducteur (cas notamment de feutres ou tissés de graphite ou carbone), il est nécessaire que le premier dépôt métallique soit effectué par voie chimique. Mais l'épaisseur d'un tel type de dépôt est le plus souvent insuffisante pour qu'il suffise à lui seul à assurer une conductibilité électrique suffisante. Il y a alors avantage à le faire suivre d'un second dépôt métallique, effectué par voie électrochimique.

De façon préférentielle mais non limitative le matériau constituant le collecteur sera soit du cuivre, soit du nickel, soit une combinaison des deux dépôts successifs.

Ces deux métaux sont choisis, le premier pour son excellente conductivité et son coût limité, le second pour sa bonne tenue mécanique et chimique dans la plupart des milieux électrolytiques d'utilisation d'électrodes conçues selon la présente invention.

A titre d'exemples non limitatifs de l'invention, et dans les cas notamment de réalisation d'électrodes de cadmium ou d'oxyde ou d'hydroxyde de nickel, on peut constituer le collecteur par métallisation selon les variantes suivantes:

—dépôt chimique de nickel, par exemple selon le procédé Kanigen
—dépôt chimique de nickel suivi d'un dépôt électrochimique de nickel
—dépôt de cuivre chimique suivi d'un dépôt de nickel électrochimique
—dépôt de nickel chimique, suivi d'un dépôt de cuivre électrochimique, lui-même recouvert d'un dépôt de nickel électrochimique
—dépôt de cuivre chimique suivi d'un dépôt de cuivre électrochimique, lui-même recouvert d'un dépôt de nickel électrochimique.

Ces cinq voies sont notamment susceptibles de servir à la constitution de collecteurs aussi bien pour une électrode à l'oxyde ou à l'hydroxyde de nickel que pour une électrode de cadmium. Elles conviennent particulièrement dans le premier cas, dans la mesure où il est préférable que le dernier dépôt métallique soit inerte dans le milieu électrolytique de fonctionnement de l'électrode, le dépôt de matière active (oxyde ou hydroxyde de nickel) étant poreux. Les deux voies suivantes conviennent notamment plus particulièrement à la réalisation de collecteurs pour électrodes de cadmium:

—dépôt de nickel chimique suivi d'un dépôt de cuivre électrochimique,
—dépôt de cuivre chimique suivi d'un dépôt de cuivre électrochimique.

On a dit précédemment qu'afin d'obtenir des électrodes permettant à des générateurs de fournir une énergie massique et une puissance massique élevées, les substrats initiaux d'électrodes sont choisis notamment pour leur faible densité: leur poids doit être faible par rapport à celui du matériau d'électrode.

Selon l'invention qui fait l'objet du présent brevet, il est possible d'aller plus loin dans cette voie, en éliminant le substrat initial: cette opération consiste, lorsque la structure du substrat rend cette opération concevable, à oxyder celui-ci après qu'aient été effectués les dépôts métalliques nécessaires à la réalisation du collecteur de courant. Cette oxydation doit de préférence être brutale afin de conduire rapidement à l'élimination du substrat initial. La méthode d'oxydation qui peut être utilisée de façon préférentielle est une oxydation thermique qui provoque une calcination du substrat. Dans le cas, par exemple, de substrats de polyesters, notamment fibreux, l'oxydation peut être menée en atmosphère oxydante dans un four porté à une température d'environ 300 à 350°C.

Lorsque l'on opère ainsi l'élimination du substrat initial, le collecteur de courant métallique qui a été antérieurement réalisé, conserve la structure apparente du substrat mais sans que demeure le squelette que formait celui-ci. L'avantage essentiel que l'on retire de cette technique est la disparition ou quasi-disparition en poids du substrat initial, ce qui permet de réaliser, par exemple pour des électrodes de nickel ou de cadmium, un gain d'environ 10 à 15% de capacité spécifique par rapport aux électrodes de nickel ou de cadmium réalisées sans élimination du stubstrat après formation du collecteur. Un avantage secondaire réside dans le fait que l'adhérence de la matière active de l'électrode sur le collecteur se trouve accrue du fait d'une porosité supérieure du collecteur.

Un tel traitement particulièrement recommandé lorsque le matériau composant le substrat poreux initial, qu'il soit organique ou minéral, est susceptible de ne pas présenter une parfaite stabilité physico-chimique dans le milieu électrolytique dans lequel l'électrode, une fois réalisée, sera destinée à fonctionner. Ainsi, par exemple, les substrats poreux à base notamment de polyesters peuventils être avantageusement oxydés thermiquement lorsque l'électrode est appelée à fonctionner en milieu basique.

Dans le cas où l'on réalise ainsi l'élimination du substrat initial, les voies de constitution du collecteur qui comprennent un premier dépôt chimique de nickel peuvent notamment être préférentiellement retenues lorsque le milieu électrolytique dans lequel l'électrode est appelée à fonctionner serait de nature à provoquer une attaque chimique du cuivre.

Une fois réalisés les dépôts métalliques destinés à constituer le collecteur, celui-ci peut notamment, lorsqu'il est essentiellement constitué de nickel électrodéposé à partir d'un bain de nickel à base de sulfate, présenter une rigidité très grande susceptible de constituer une gène pour ses manipulations ultérieures, qu'il s'agisse du dépôt de la matière active d'électrode, de mises en forme ou de mise en place au sein d'une cellule électrolytique; le manque de souplesse du collecteur peut constituer une cause de fragilité de l'électrode.

Pour pallier cet inconvénient et selon l'un des acpects de l'invention qui fait l'objet du présent brevet, il est possible d'effecteur sur le collecteur une fois réalisé, une opération de recuit des dépôts métalliques. Une telle opération a pour effet de conférer au collecteur une plus grande souplesse et de réduire par conséquent de façon considérable les risques de rupture de cette structure. Dans le cas d'un collecteur essentiellement constitué de nickel, par exemple, l'opération de recuit peut être effectuée en atmosphère neutre ou réductrice dans un four porté à environ 850°C pendant une durée voisine de une heure.

Une fois réalisé le collecteur de courant par métallisation du substrat mince microporeux, on procède, dans tout son volume sur la totalité de la surface développée nickelée, au dépôt d'une couche de matière active d'électrode. La nature de ce dépôt est bien évidemment fonction de la nature de l'électrode que l'on désire constituer. En tout état de cause, son épaisseur doit être calculée de manière à ne pas réduire de façon sensible la porosité de l'ensemble et la surface développée.

En résumé, une électrode réalisée selon l'invention est donc nécessairement réalisée à partir d'un substrat mince perméable constitué par un matériau minéral ou organique de texture poreuse ou fibreuse, le substrat ayant une porosité supérieure à 50% et étant métallisé sur la totalité de sa surface développée, c'est-à-dire à travers toute son épaisseur afin de constituer un collecteur de charges, un dépôt de la matière active d'électrode étant ensuite réalisé sur l'ensemble de la surface développée, c'est-à-dire à travers toute l'épaisseur du substrat métallisé sans colmater ce dernier; le substrat de départ, dans le cas d'un film microporeux, présente une épaisseur inférieure ou égale à 50 $\mu$m et des pores d'un diamètre compris entre 3 et 30 $\mu$m et dans le cas d'autres structures poreuses ou fibreuses, conserve le même rapport entre sa porosité, le diamètre de ses pores ou les dimensions de ses interstices internes, et son épaisseur que dans le cas d'un film microporeux; l'épaisseur du dépôt de la matière active d'électrode est choisie de façon à ce que la porosité et la surface développée du substrat ne soient pas sensiblement réduites. Ces caractéristiques conduisent, comme l'illustreront les exemples qui suivent, à une capacité massique de l'électrode de nickel et de l'électrode de cadmium, supérieure à 200 Ah/kg. Une électrode ainsi réalisée peut en outre bénéficier des traitements complémentaires que constituent l'élimination du substrat initial et le recuit de la structure métallique.

On s'attachera, à titre d'exemple non limitatif d'application de la technologie qui fait l'objet du présent brevet, à mettre en évidence les caractéristiques et avantages de celle-ci dans le cas de son emploi pour la réalisation des négatives et des positives d'un générateur nickel-cadmium. Naturellement, il est parfaitement concecable de n'utiliser la technologie que l'on revendique ici que pour la réalisation d'un seul des deux types d'électrodes d'un générateur, en l'occurence dans l'exemple décrit ci-dessous, pour les positives de nickel ou pour nes négatives de cadmium, les électrodes de l'autre polarité pouvant être conçues selon une quelconque autre technique.

Il convient, avant d'entrer dans la description des électrodes d'un accumulateur nickel-cadmium, selon l'invention, de justifier le choix qui a été fait de cet exemple. En effet, cet accumulateur est généralement connu comme performant mais particulièrement coûteux, notamment à cause des électrodes de cadmium. Ce handicap économique limite actuellement les utilisations du couple Ni-Cd à des domaines très restreints.

En fait, un examen attentif fait apparaître que l'importance du coût de ce type de générateur n'est pas le fait du prix du cadmium, mais se trouve essentiellement liée aux techniques connues de mise en oeuvre des composants, notamment dans le cas de l'utilisation d'électrodes minces frittées.

Par ailleurs, s'il est vrai que l'électrode de cadmium se caractérisé par un potentiel négatif peu élevé (tout comme les électrodes de fer ou d'hydrures), ce handicap est largement compensé par l'aptitude de cette électrode à fonctionner sous des régimes de charge et de décharge sévères, qualité qui rend l'accumulateur Ni-Cd particulièrement apte aux demandes de puissance.

Enfin, si l'on considère la capacité massique des électrodes de nickel et de cadmium, on constate que, en faisant appel aux techniques actuellement les plus élaborées, elle demeure, pour chacune des deux électrodes, inférieure à 120 Ah/kg. Les capacités massiques théoriques sont pourtant de 294 Ah/kg pour l'hydroxyde de nickel et de 480 Ah/kg pour le cadmium. La perte constatée au niveau pratique par rapport à l'énergie massique théorique est donc très importante. Ceci tient, certes, à des rendements faradiques bien inférieurs à l'unité, mais aussi à un rapport masse active/collecteur, en poids, particulièrement défavorable. Il apparaît que le couple Ni-Cd pourrait être utilisé pour la réalisation d'accumulateurs d'un coût comparable à celui du couple Pb-PbO$_2$ et de capacité massique élevée (supérieure à 200 Ah/kg par électrode) à la condition d'adopter une technologie d'électrodes qui permette de rendre négligeable le poids des matières non actives par rapport à celui des matières actives dans la composition des électrodes. Par l'utilisation d'une masse réduite de composants inactifs (substrats, collecteurs, séparateurs) on accède à un meilleur rendement des matières actives.

Afin d'atteindre cet objectif, des électrodes de nickel et de cadmium ont été réalisées selon l'invention. On en donne ici une description à titre d'exemple non limitatif de l'invention.

La positive de nickel est constituée en utilisant pour substrat microporeux, un feutre de nylon d'une épaisseur d'environ trois dixièmes de millimètre et d'un poids de 6 mg/cm2 de surface apparente. On réalise une métallisation de la totalité de la surface développée, c'est-à-dire à la surface des fibres dans toute l'épaisseur du feutre par dépôt chimique de nickel selon le procédé Kanigen. Afin de renforcer ce premier dépôt, on le complète par un nickelage électrochimique selon une technique classique. Une fois réalisés ces deux dépôts, le collecteur de courant pèse environ 25 mg/cm2 de surface apparente. On procède alors au dépôt de la matière active de l'électrode, l'hydroxyde de nickel, qui peut être effectué par exemple selon une voie électrochimique classique, la réduction électrolytique des nitrates de nickel. On dépose ainsi environ 70 mg d'hydroxyde de nickel par cm2 de surface apparente, ce qui conduit à un poids total de l'électrode d'environ 95 mg/cm2 de surface apparente. Son utilisation en cycles de charge et décharge sous un régime de

$$\frac{C}{2}$$

fait apparaître une capacité de l'électrode voisine de 20 mAh/cm2 de surface apparente, soit une capacité spécifique, pour cette électrode, supérieure à 200 Ah/kg.

De son côté, la négative de cadmium est réalisée à partir du même substrat microporeux sur lequel on effectue, comme pour la positive, les opérations de nickelage chimique et électrochimique. Signalons que le substrat utilisé pour la négative peut être choisi plus mince que celui qui est employé pour la réalisation de la positive, dans la mesure où la capacité massique de cadmium est approximativement deux fois supérieure à celle de l'hydroxyde de nickel. On dépose ensuite le cadmium sur l'ensemble de la surface développée nickelée, selon une voie électrochimique. Ce dépôt représente un poids d'environ 45 mg de cadmium par cm2 de surface apparente, ce qui conduit à un poids total de l'électrode d'environ 70 mg/cm2. En fonctionnement en cycles de charge et décharge sous un régime de

$$\frac{C}{2},$$

la capacité de l'électrode apparaît comme étant ici encore d'environ 20 mAh/cm2 de surface apparente, ce qui correspond à une capacité spécifique légèrement inférieure à 300 Ah/kg.

Compte tenu de poids de l'électrolyte imprégnant les deux électrodes conçues selon l'invention, du poids du séparateur (feutre mince de PVC ou de nylon par exemple) et de celui de l'électrolyte l'imprégnant, le poids de l'ensemble des éléments actifs d'un accumulateur Ni-Cd selon l'invention, est d'environ 230 mg/cm2. Sa capacité massique se situe à environ 90 Ah/kg. La tension enregistrée, au cours de cycles au régime

$$\frac{C}{2},$$

aux bornes du générateur, est d'environ 1,15 V. Les éléments actifs d'un tel générateur offrent donc une énergie spécifique massique voisine de 100 Wh/kg. Si l'on tient compte du fait que la réalisation d'un accumulateur complet grèverait d'environ 20% le bilan pondéral défini (poids du bac, des bornes, ...), on peut admettre que le générateur complet peut offrir une énergie massique d'environ 80 Wh/kg.

Naturellement, selon la présente invention, il est possible, après constitution des collecteurs de courant, d'oxyder thermiquement le substrat microporeux, ce qui permet, au niveau de chaque électrode, de réaliser un gain en poids de 6 mg/cm2 et d'améliorer encore les capacités spécifiques des électrodes et l'énergie massique d'un générateur les utilisant.

Il convient de souligner, à ce stade, que ces calculs portent sur un système dont les caractéristiques, propres aux composants, peuvent être optimisées en fonction des différents critères définis dans la description et que l'on peut considérer que les valeurs indiquées dans l'exemple cité sont des valeurs basses.

Un générateur Ni-Cd réalisé selon l'invention et tel, par exemple, que décrit dans l'illustration qui vient d'être donnée, est d'une mise en oeuvre considérablement plus simple que ceux qui font appel aux techniques classiques. Son coût se trouve réduit dans des proportions très importantes, ce qui permet d'ouvrir au générateur Ni-Cd des domaines nouveaux et vastes d'application.

On peut enfin citer brièvement comme autre type d'électrode susceptible d'être avantageusement réalisée selon l'invention, l'électrode de fer. En effet, avec un film microporeux présentant 70% de porosité, d'une épaisseur de 150 $\mu$m, ayant des pores d'un diamètre d'environ 10 $\mu$m, il est possible de réaliser une électrode de fer offrant une capacité de l'ordre de 400 Ah/kg de fer, en effectuant un dépôt de 3 à 4 mg de fer par cm2 de surface apparente du substrat.

Naturellement, et comme il résulte d'ailleurs plus largement de ce qui précède, l'invention n'est limitée ni aux exemples de réalisation ni aux modes d'obtention qui ont été décrits.

**Revendications**

1. Electrode de générateur électrochimique dont la structure est réalisée à partir d'un substrat mince perméable constitué par un matériau minéral ou organique de texture poreuse ou fibreuse, le substrat ayant une porosité supérieure à 50% et étant métallisé sur la totalité de sa surface développée, c'est à dire dans toute son épaisseur afin de constituer un collecteur de charges, un dépôt de la matière active d'électrode étant ensuite réalisé sur l'ensemble de la surface développée, c'est à dire dans toute l'épaisseur du substrat métallisé sans colmater ce dernier, caractérisée en ce que le substrat de départ, dans le cas d'un film microporeux, présente une épaisseur inférieure ou égale à 500 $\mu$m et des pores d'un diamètre compris entre 3 et 30 $\mu$m, et dans le cas d'autres structures poreuses ou fibreuses le substrat de départ conserve le même rapport entre sa porosité, le diamètre de ses pores ou les dimensions des ses interstices internes, et son épaisseur que dans le cas d'un film microporeux, en ce que l'épaisseur du dépôt de la matière active d'électrode est choisie de façon à ce que la porosité et la surface développée du substrat ne soient sensiblement réduites, et en ce que l'électrode présente une capacité massique supérieure à 200 Ah/kg.

2. Electrode selon la revendication 1, caractérisée en ce que le substrat perméable utilisé est soit un film microporeux, soit une structure fibreuse tissée ou non tissée.

3. Electrode selon la revendication 1, caractérisée en ce que le collecteur de courant est réalisé sur toute la surface développée du substrat initial, c'est à dire dans toute son épaisseur et est essentiellement constitué par dépôt de cuivre et/ou de nickel.

4. Electrode selon la revendication 1, caractérisée en ce que le collecteur de courant est réalisé sur toute la surface développée du substrat initial, c'est à dire dans toute son épaisseur, par un dépôt de nickel chimique suivi d'un dépôt de nickel électrochimique.

5. Electrode selon la revendication 1, caractérisée en ce que le collecteur de courant est réalisé sur toute la surface développée du substrat initial, c'est à dire dans toute son épaisseur, par un dépôt de nickel chimique suivi d'un dépôt de cuivre électrochimique.

6. Electrode selon la revendication 1, caractérisée en ce que le collecteur de courant est réalisé sur toute la surface développée du substrat initial, c'est à dire dans toute son épaisseur, par dépôts successifs de nickel chimique, de cuivre électrochimique et enfin de nickel électrochimique.

7. Electrode selon la revendication 1 et l'une quelconque des revendications 2 à 6 incluses, caractérisée en ce que le substrat initial, une fois réalisé le collecteur de courant par métallisation, est thermiquement oxydé afin d'obtenir son élimination.

8. Electrode selon la revendication 1 et l'une quelconque des revendications 2 à 7 incluses, caractérisée en ce que, une fois réalisé le collecteur de courant, on effectue une opération de recuit du ou des dépôts métalliques le constituant.

9. Electrode selon la revendication 1 et l'une quelconque des revendications 2, 3, 4, 6, 7, 8, caractérisée en ce que l'on réalise une électrode à base d'oxyde ou d'hydroxyde de nickel par formation électrochimique de la matière active sur le collecteur de courant.

10. Electrode selon la revendication 1 et l'une quelconque des revendications 2 à 8 incluses, caractérisée en ce que l'on réalise une électrode de cadmium par dépôt électrochimique du cadmium, matière active de l'électrode, sur le collecteur de courant.

**Patentansprüche**

1. Elektrochemische Generatorelektrode, deren Struktur aus einem durchlässigen dünnen Substrat, das aus einem mineralischen oder organischen Stoff mi porösem oder faserigem Gefüge besteht, hergestellt ist, wobei das Substrat eine Porosität von über 50% besitzt und auf der ganzen abgewickelten Fläche, d.h. in seiner ganzen Dicke, metallisiert ist, um einen Ladungskollektor zu bilden, und ein Niederschlag des aktiven Elektrodenstoffes dann über die ganze abgewickelte Fläche aufgebracht wird, d.h. in der ganzen Dicke des metallisierten Substrates ohne jedoch letzteres zu verstopfen, dadurch gekennzeichnet, dass das Ausgangssubstrat im Fall eines mikroporösen Films eine Dicke bis zu 500 $\mu$m und Poren mit einem Durchmesser von 3 bis 30 $\mu$m aufweist und dass das Ausgangssubstrat im Falle anderer poröser oder faseriger Strukturen dasselbe Verhältnis zwischen seiner Porosität, dem Durchmesser seiner Poren oder den Abmessungen seiner inneren Zwischenräume und seiner Dicke wie im Falle eines mikroporösen Films beibehält, dass die Dicke des Niederschlages des aktiven Electrodenstoffes so gewählt wird, dass die Porosität und die abgewickelte Fläche des Substrates nicht erherblich vermindert werden, und dass die Elektrode eine MassenKapazität von über 200 Ah/kg darstellt.

2. Elektrode nach Anspruch 1, dadurch gekennzeichnet, dass das verwendete durchlässige Substrat entweder ein mikroporöser Film oder ein gewebtes oder nichtgewebtes faseriges Gefüge ist.

3. Elektrode nach Anspruch 1, dadurch gekennzeichnet, dass der Stromkollektor auf der ganzen abgewickelten Fläche des Ausgangssubstrates, d.h. in seiner ganzen Dicke, hauptsächlich aus einem Kupfer und/oder Nickelniederschlag besteht.

4. Elektrode nach Anspruch 1, dadurch gekennzeichnet, dass der Stromkollektor auf der ganzen abgewickelten Fläche des Ausgangssubstrates, d.h. in seiner ganzen Dicke, aus einem chemischen Nickelniederschlag gefolgt von einem elektrochemischen Nickelniederschlag besteht.

5. Elektrode nach Anspruch 1, dadurch gekennzeichnet, dass der Stromkollektor auf der ganzen abgewickelten Fläche des Ausgangssubtrates, d.h. in seiner ganzen Dicke, aus einem chemischen Nickelniederschlag gefolgt von einem elektrochemischen Kupferniederschlag besteht.

6. Elektrode nach Anspruch 1, dadurch gekennzeichnet, dass der Stromkollektor auf der ganzen abgewickelten Fläche des Ausgangssubstrates, d.h. in seiner ganzen Dicke, aus aufeinanderfolgenden Niederschlägen aus chemischem Nickel, elektrochemischem Kupfer und schliesslich aus elektrochemischem Nickel besteht.

7. Elektrode nach Anspruch 1 und einem des Ansprüche 2 bis einschliesslich 6, dadurch gekennzeichnet, dass das Ausgangssubstrat, nachdem der Stromkollektor durch Metallisieren hergestellt ist, thermisch oxidiert wird, um dessen Beseitigung herbeizuführen.

8. Elektrode nach Anspruch 1 und einem der Ansprüche 2 bis einschliesslich 7, dadurch gekennzeichnet, dass nach Herstellung des Stromkollektors ein Glühen des oder der Metallniederschläge, aus denen er besteht, stattfindet.

9. Elektrode nach Anspruch 1 und einem der Ansprüche 2, 3, 4, 6, 7, oder 8, dadurch gekennzeichnet, dass durch elektrochemische Bildung des aktiven Stoffes auf dem Stromkollektor eine Elektrode auf Nickeloxid-oderhydroxidbasis hergestellt wird.

10. Elektrode nach Anspruch 1 und einem der Ansprüche 2 bis einschliesslich 8, dadurch gekennzeichnet, dass eine Kadmiumelektrode durch elektorchemischen Niederschlag des Kadmiums, aktiver Stoff der Elektrode, auf dem Stromkollektor hergestellt wird.

## Claims

1. Electrode for electrochemical generator whose structure is made from a thin permeable substrate consisting of a mineral or organic material with a porous or fibrous texture, the porosity of the substrate being higher than 50 percent and the substrate being metallized all over its developed area, i.e. through its entire thickness so as to constitute a charge collector, the active electrode material being subsequently deposited all over the developed area, i.e. through the entire thickness of the metallized substrate but without plugging it, characterized in that the initial substrate, in case of a microporous film, is 500 $\mu$m thick or less with pores whose diameter is between 3 and 30 $\mu$m; in the case of other porous or fibrous structures the initial substrate retains the same ratio between its porosity, the diameter of its pores or the dimensions of its internal interstices and its thickness as in the case of a microporous film, in that the thickness of the active electrode material deposit is selected so as not to markedly reduce the porosity and the developed area of the substrate and in that the massic capacity of the electrode is higher than 200 Ah/kg.

2. Electrode per claim 1, characterized in that the permeable substrate used is either a microporous film, or a woven or non-woven fibrous structure.

3. Electrode per claim 1, characterized in that the current collector is made on the entire developed area of the initial substrate, i.e. through its entire thickness, and essentially consists of a deposit of copper and/or nickel.

4. Electrode per claim 1, characterized in that the current collector is made on the entire developed area of the initial substrate, i.e. through its entire thickness, through depositing of chemical nickel, followed by depositing of electro-chemical nickel.

5. Electrode per claim 1, characterized in that the current collector is made on the entire developed area of the initial substrate, i.e. through its entire thickness, through depositing of chemical nickel, followed by depositing of electro-chemical copper.

6. Electrode per claim 1, characterized in that the current collector is made on the entire developed area of the initial substrate, i.e. through its entire thickness, through successive depositings of chemical nickel, of electrochemical copper and, finally electro-chemical nickel.

7. Electrode per claim 1 and any one of claims 2 to 6 inclusive, characterized in that the initial substrate is oxidized thermally once the current collector has been made by metallization, so as to eliminate it.

8. Electrode per claim 1 and any one of claims 2 to 7 inclusive, characterized in that, after execution of the current collector, an annealing operation of the metal deposit(s) comprising it is carried out.

9. Electrode per claim 1 and any one of claims 2, 3, 4, 6, 7, 8, characterized in that a nickel oxide or hydroxide-based electrode is produced through electro-chemical formation of the active material on the current collector.

10. Electrode per claim 1 and any one of claims 2 to 8 inclusive, characterized in that a cadmium electrode is produced by electrochemical depositing of cadmium, the active electrode material, on the current collector.